# DEMANDE DE BREVET EUROPEEN

(11) **EP 2 039 575 A1**
(43) Date de publication de la demande: **25.03.2009**
(21) Numéro de dépôt: 08162976.8
(22) Date de dépôt: 26.08.2008
(51) Int. Cl.: B60T 13/567

(54) **Boîtier de servomoteur d'assistance au freinage**

(30) Priorité: 29.08.2007 FR 0706101
(71) Demandeur: Robert Bosch GmbH, 70442 Stuttgart (DE)
(72) Inventeur: Leboisne, Cédric, 94170, Le Perreux sur Marne (FR)
(74) Mandataire: Hurwic, Aleksander Wiktor

(57) **Abrégé**

L'invention concerne un servomoteur d'assistance au freinage comprenant un boîtier (10) contenant une jupe mobile (15) délimitant une chambre avant (10av) située entre une paroi avant (11) du boîtier et la jupe mobile (15), et une chambre arrière (10ar) située entre une paroi arrière (13) du boîtier et la jupe mobile (15). Deux tirants de fixation (30, 31) situés de part et d'autre de l'axe (X) du boîtier du servomoteur fixent une paroi (13) du boîtier à une paroi du véhicule.

Selon l'invention, la paroi (13) du boîtier du servomoteur qui est fixée à la paroi du véhicule et la cheminée (16) qui contient le piston (17) du servomoteur comportent des nervures de rigidification (40) situées entre les tirants et la cheminée (16).

Application: Frein pour véhicule automobile

## Description

L'invention concerne un servomoteur d'assistance au freinage et plus particulièrement un servomoteur à rigidité améliorée.

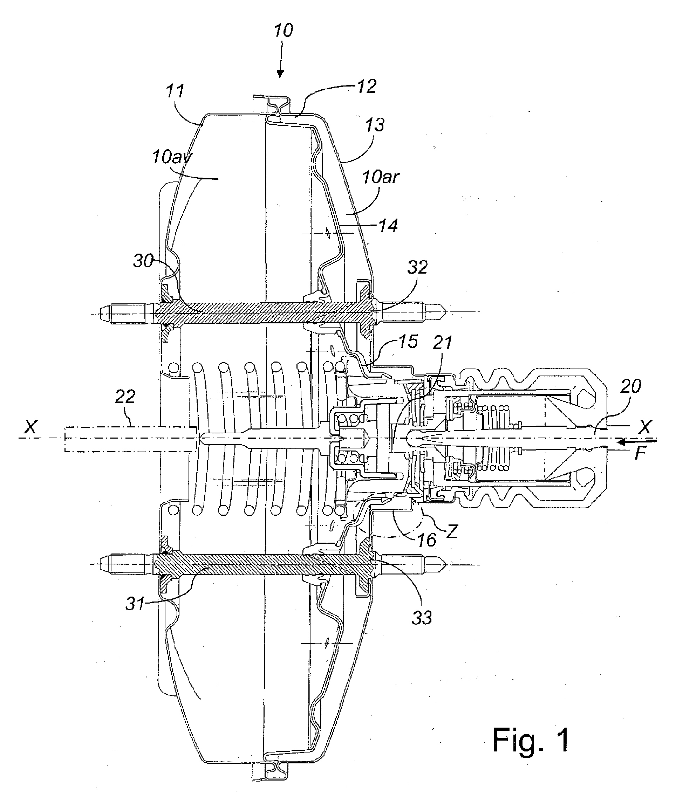

Un servomoteur d'assistance au freinage tel que celui représenté en figure 1 comporte essentiellement un boîtier 10 comprenant une paroi avant 11, une paroi latérale 12 et une paroi arrière 13. Ce boîtier comporte deux chambres (la chambre avant 10av et la chambre arrière 10ar) séparées par une membrane mobile 14.

Une tige de commande 20 peut se déplacer vers l'avant du véhicule (selon la flèche F1 sur la figure 1) lorsque le conducteur du véhicule actionne la pédale de frein. Ce déplacement de la tige de commande 20 est transmis à un distributeur-plongeur 21 qui actionne des moyens d'assistance. Comme cela est connu dans la technique, ces moyens d'assistance comprennent généralement une vanne trois voies dont l'actionnement permet soit de mettre en communication la chambre avant 10av du servomoteur avec la chambre arrière 10ar, soit d'interrompre cette communication, soit de mettre en communication la chambre arrière à l'atmosphère ambiante.

La chambre avant 10av est normalement sous vide. Au repos (en l'absence de commande de freinage), les deux chambres avant et arrière sont en communication et une même pression règne dans les deux chambres.

Lorsque le conducteur appuie sur la pédale de frein, la tige de commande 20 est déplacée vers l'avant (vers la gauche sur la figure). Le distributeur-plongeur est déplacé vers l'avant et commande le fonctionnement de la vanne trois voies. Celle-ci isole les deux chambres avant et arrière et met en communication la chambre arrière avec la pression atmosphérique.

En raison de la différence de pressions entre les deux chambres, une force d'assistance est exercée sur la membrane mobile 14 qui sépare les deux chambres. Cette membrane mobile 14 est associée à une jupe 15 en matériau rigide. Sous l'effet de la force d'assistance, la membrane mobile tend à se déplacer vers l'avant et entraîne la jupe 15.

La jupe 15 entraîne elle-même le piston 22 qui se déplace alors vers l'avant (selon le sens de la flèche F1) en agissant sur une tige de poussée qui sert à actionner un piston 22 du maître-cylindre du circuit de freinage.

Le servomoteur possède une partie cylindrique 16, que nous appellerons "cheminée", qui est de diamètre inférieur au diamètre extérieur du servomoteur et qui, disposée de manière coaxiale avec le servomoteur, permet de recevoir la vanne trois voies et le piston du servomoteur.

Par ailleurs, pour des questions de poids et d'encombrement, les parois du boîtier du servomoteur sont de préférence minces. Par exemple, elles sont en tôle métallique mince. Au repos, il en résulte un risque de déformation des parois en raison des différences de pression qui règnent entre l'intérieur su servomoteur et l'extérieur.

Pour éviter des déformations du boîtier, selon une technique connue, on prévoit des tirants 30 et 31 qui traversent de part en part le boîtier parallèlement à l'axe X du servomoteur et qui ont pour but de maintenir constante la distance entre les parois avant et arrière 11 et 13 du servomoteur.

Les extrémités arrière (à droite sur la figure 1) des tirants sont fixées à une paroi du véhicule (le tablier qui sépare l'habitacle du compartiment moteur par exemple). Les zones 32 et 33 des tirants sont solidement fixées au véhicule, ces zones ne peuvent pas bouger. Par contre, entre les zones 32 et 33, sous l'effet d'une basse pression dans la chambre arrière 10ar, la paroi 12 du servomoteur peut se déformer. Cette déformation est variable en fonction du vide dans la chambre arrière 10ar. Elle se produit dans la zone telle que Z où se trouve le raccordement entre la paroi 13 du servomoteur et la cheminée 16. On constate que, dans cette zone, la déformation de la paroi 13 est telle que, dans certains cas, elle peut ne pas se produire selon l'axe X du servomoteur et que l'axe de la cheminée 16 peut alors adopter une position qui n'est plus colinéaire avec l'axe du servomoteur. Cette déformation sera variable en fonction du niveau de vide dans la chambre arrière du servomoteur.

Il en résulte un dérèglement de la côte d'interface avec le maître cylindre 22, ce qui peut avoir pour conséquences:
- une augmentation de la course morte du système de freinage,
- une création de pression résiduelle,
- une mise en biais de l'ensemble mobile au repos,
- une usure des coupelles d'étanchéité du maître cylindre
- des fuites pneumatiques notamment entre la cheminée 16 et le piston pneumatique.

L'invention permet de résoudre ces inconvénients.

L'invention concerne donc un servomoteur d'assistance au freinage comprenant:
- un boîtier contenant une jupe mobile délimitant une chambre avant située entre une paroi avant du boîtier et la jupe mobile, et une chambre arrière située entre une paroi arrière du boîtier et la jupe mobile. La jupe mobile active un piston situé selon l'axe du boîtier. De plus, le boîtier comporte une cheminée de diamètre inférieur au diamètre du boîtier, solidaire de la paroi arrière du boîtier de façon coaxiale avec l'axe du boîtier, et destinée à contenir ledit piston,
- au moins deux tirants de fixation situés de part et d'autre de l'axe du boîtier du servomoteur et fixant une paroi du boîtier à une paroi du véhicule.

Selon l'invention, la paroi du boîtier du servomoteur qui est fixée à la paroi du véhicule comporte des nervures de rigidification situées entre les tirants et ladite cheminée du boitier.

Selon une forme de réalisation de l'invention, la paroi du servomoteur qui est fixée à une paroi du véhicule est la paroi arrière et les tirants de fixation sont situés de part et d'autre de la cheminée.

De préférence, lesdites nervures de rigidification sont des nervures embouties dans le matériau de la paroi arrière du boîtier du servomoteur.

On pourra prévoir que chaque nervure de rigidification est située sur la face de la paroi arrière du boîtier et sur ladite cheminée.

On pourra également prévoir que chaque nervure est située entre la cheminée et un tirant de fixation.

Selon une forme de réalisation avantageuse de l'invention, le servomoteur comportera deux nervures symétriques par rapport à l'axe du boîtier.

On pourra également prévoir que le servomoteur comporte quatre nervures symétriques deux à deux par rapport à l'axe du boîtier.

Selon une autre forme de réalisation de l'invention, la paroi arrière du boîtier du servomoteur comporte une nervure circulaire.

Avantageusement, cette nervure circulaire joint les zones de fixation des tirants.

Dans cette forme de réalisation, on pourra prévoir que les nervures radiales joignent la nervure circulaire à la périphérie de la cheminée.

Les différents objets et caractéristiques de l'invention apparaîtront plus clairement dans la description qui va suivre et dans les figures annexées qui représentent:
- la figure 1, un servomoteur d'assistance au freinage connu dans la technique et auquel peut s'appliquer l'invention,
- la figure 2, un exemple de réalisation d'un servomoteur d'assistance au freinage selon l'invention,
- la figure 3, une vue détaillée du dispositif selon l'invention,
- les figures 4a à 4c, un exemple de réalisation du dispositif selon l'invention,
- les figures 5a à 5c, une variante de réalisation du dispositif selon l'invention.

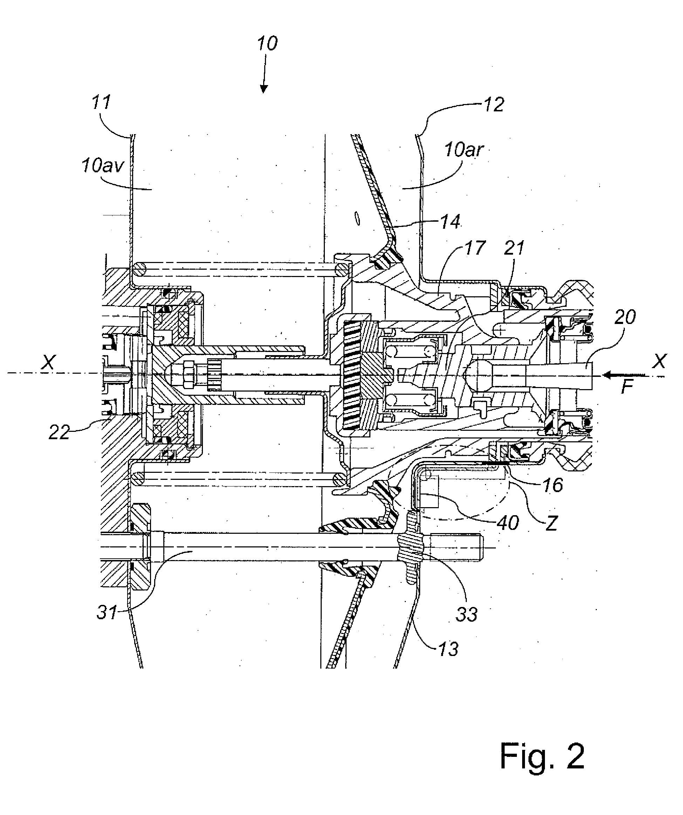

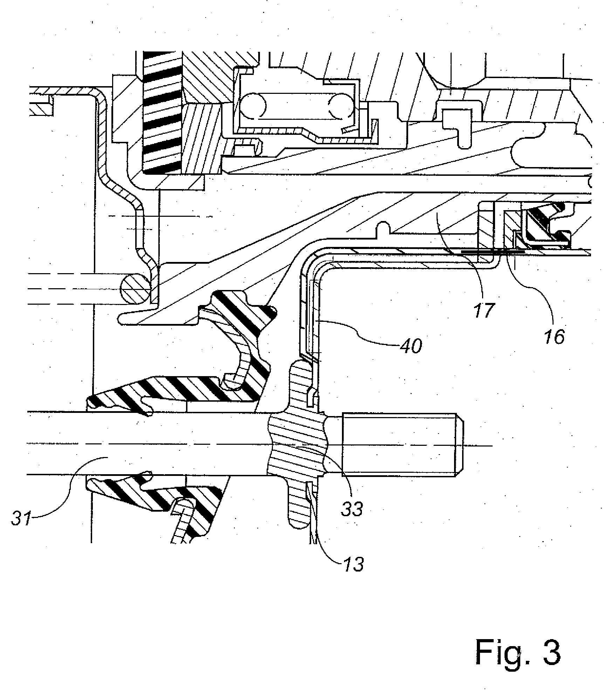

En se reportant aux figures 2 et 3, on va donc décrire un exemple de réalisation du servomoteur selon l'invention.

Comme cela a été décrit précédemment, le boîtier du servomoteur possède une cheminée 16 solidaire de la paroi arrière 13 du boîtier. Cette cheminée contient le piston pneumatique 17 qui coulisse dans la cheminée.

Le distributeur-plongeur 21 qui commande le fonctionnement du servomoteur et qui est commandé par la tige de commande 20, est situé dans le piston au niveau de la cheminée 16.

Lorsque le servomoteur est au repos et qu'aucune commande de freinage n'est appliquée par la tige de commande 20, la chambre arrière 10ar est à la même pression que la chambre avant 10av c'est-à-dire à une pression faible tel que le vide.

Sous l'effet du vide qui règne dans la chambre arrière, la paroi arrière 13 a tendance à être attirée vers l'intérieur du boîtier du servomoteur. Notamment, dans la zone Z, le boîtier a tendance à se déformer. La cheminée 16 peut adopter une position non coaxiale avec l'axe du servomoteur.

L'invention prévoit donc un boîtier de servomoteur qui possède des nervures de rigidification, telle que la nervure 40, au niveau du raccord entre la cheminée 16 et la paroi arrière 13.

Avantageusement, on prévoira que ces nervures sont embouties dans la paroi arrière 13 et dans la paroi de la cheminée. Cependant, il convient de noter que ces nervures, doivent être alors d'une longueur limitée le long de la cheminée 16 car le piston 17 doit coulisser de manière étanche dans la cheminée. Celle-ci doit présenter, au niveau des moyens d'étanchéité situés entre le piston et la cheminée, une surface extérieure parfaitement cylindrique pour que l'étanchéité soit efficace.

Selon une forme de réalisation préférée chaque nervure est orientée radialement sur la paroi 13, puis axialement sur la cheminée.

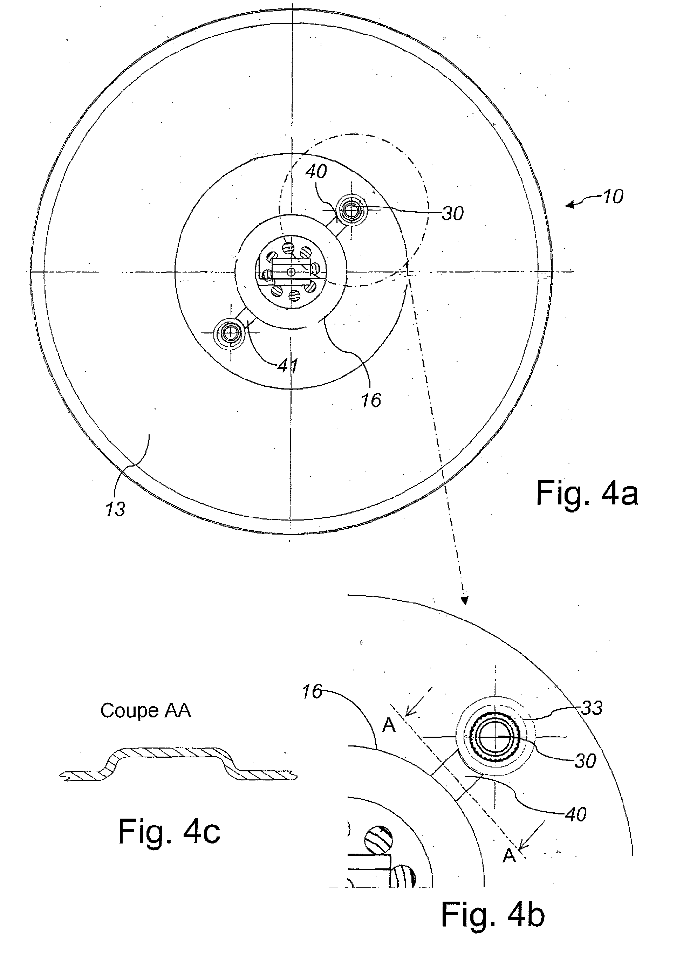

Les figures 4a à 4c représentent une forme de réalisation d'un tel servomoteur. Le boîtier est prévu pour être fixé par deux tirants 30 et 31 à une paroi du véhicule. Le boîtier du servomoteur selon l'invention comporte alors deux nervures 40 et 41. Chaque nervure joint radialement la zone de fixation 33 d'un tirant 30 ou 31 à la périphérie de la cheminée 16, puis elle se prolonge le long d'une génératrice de la cheminée.

La figure 4c représente en coupe transversale AA la forme d'une nervure qui présente donc une forme en relief par rapport à la face du boîtier.

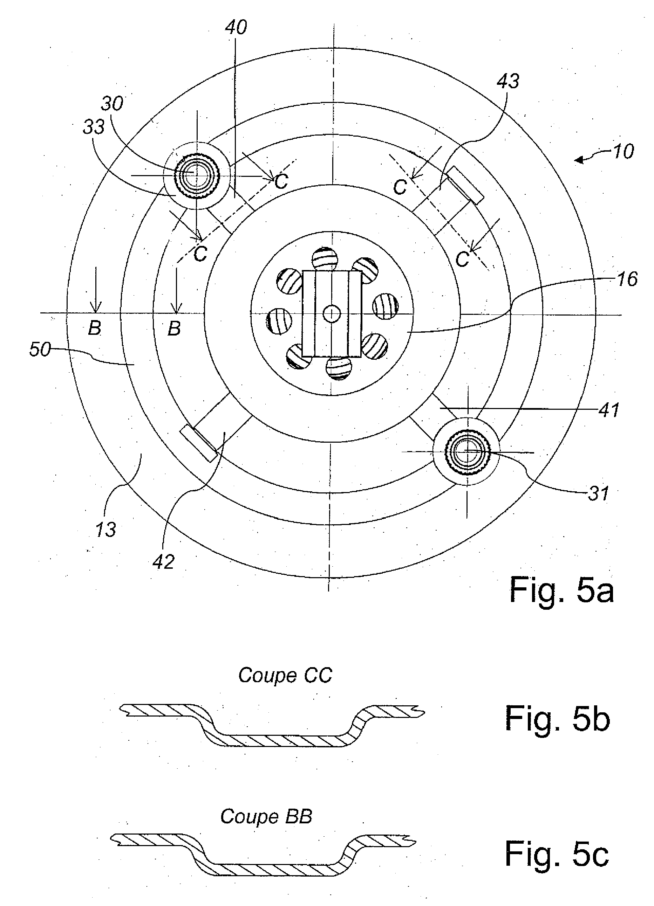

Les figures 5a à 5c représentent une variante de réalisation de l'invention.

A titre d'exemple, le servomoteur de la figure 5a comporte également deux tirants de fixation.

Comme dans le servomoteur de la figure 4a, ce servomoteur comporte des nervures 40 et 41 qui joignent les zones des tirants à la périphérie de la cheminée.

On prévoit en outre une nervure circulaire 50. De préférence, cette nervure joint les zones de fixation, telle que 33, des tirants, mais cela n'est pas obligatoire.

Pour parfaire la rigidification de la paroi arrière du boîtier du servomoteur, on prévoit également dans cette paroi arrière des nervures radiales 42 et 43 perpendiculaires au nervures 40 et 41 et qui joignent la nervure circulaire 50 à la périphérie de la cheminée. Ces deux nervures se prolongent également le long de la paroi de la cheminée.

Il est bien évident qu'il est possible de prévoir d'autres nervures radiales.

La figure 5b représente à titre d'exemple une section transversale AA d'une nervure radiale telle que la nervure 40.

La figure 5c représente une coupe transversale BB de la nervure circulaire.

Les formes des nervures ont été simplifiées sur les figures 4c, 5b et 5c. Elles pourraient avoir une forme plus compliquée sans sortir du cadre de l'invention.

Le servomoteur selon l'invention permet d'avoir ainsi une cheminée 16 plus stable ce qui permet d'avoir:
- une meilleure stabilité de la course morte du système de freinage avec une possibilité de réduction de celle-ci,
- une meilleure stabilité de la cote d'interface du maître cylindre,
- une sensibilité réduite de la cote d'interface à l'appui sur le tablier du véhicule (en particulier planéité).

L'avantage de la forme de réalisation prévoyant quatre nervures radiales et une nervure circulaire est qu'elle permet de recentrer la déformation de la cheminée dans l'axe du boîtier du servomoteur (réduction de la mise en biais de l'ensemble mobile du servomoteur au repos), d'où une diminution de l'usure des coupelles du maître cylindre et des fuites pneumatiques au repos.

Par ailleurs, un avantage supplémentaire d'un tel servomoteur est qu'il est utilisable sur différents types de véhicules (moteur diesel ou essence) dans lesquels les pressions de vide sont différentes.

## Revendications

1. Servomoteur d'assistance au freinage comprenant:
- un boîtier (10) contenant une jupe mobile (15) délimitant une chambre avant (10av) située entre une paroi avant (11) du boîtier et la jupe mobile (15), et une chambre arrière (10ar) située entre **la** paroi arrière (13) du boîtier et la jupe mobile (15), ladite jupe mobile activant un piston situé selon l'axe (X) du boîtier, ledit boîtier comportant une cheminée (16) de diamètre inférieur au diamètre du boîtier, solidaire de la paroi arrière (10ar) du boîtier de façon coaxiale avec l'axe du boîtier, et destinée à contenir ledit piston,
- au moins deux tirants de fixation (30, 31) situés de part et d'autre de l'axe (X) du boîtier du servomoteur et fixant la paroi (13) du boîtier à la paroi du véhicule,
**caractérisé en ce que** la paroi (13) du boîtier du servomoteur qui est fixée à la paroi du véhicule comporte quatre nervures de rigidification (40, 41, 42, 43) symétriques deux à deux par rapport à l'axe (X) du boîtier situées entre la cheminée (16) et les tirants de fixation (30, 31) et que lesdites nervures sont embouties dans le matériau de la paroi arrière (10AR) du boîtier du servomoteur

2. Servomoteur d'assistance au freinage selon la revendication 1, **caractérisé en ce que** la paroi du servomoteur qui est fixée à une paroi du véhicule est la paroi arrière (13) et **en ce que** les tirants de fixation (30, 31) sont situées de part et d'autre de la cheminées (16).

3. Servomoteur d'assistance au freinage selon la revendication **1, caractérisé en ce que** chaque nervure de rigidification est située sur la face de la paroi arrière du boîtier et sur ladite cheminée (16).

4. Servomoteur d'assistance au freinage selon la revendication **1, caractérisé en ce qu'**il comporte deux nervures (40, 41) symétriques par rapport à l'axe (X) du boîtier.

5. Servomoteur d'assistance au freinage selon l'une des revendications **1** ou **4, caractérisé en ce que** la paroi arrière (13) du boîtier comporte une nervure circulaire (50).

6. Servomoteur d'assistance au freinage selon la revendication **5, caractérisé en ce que** ladite nervure circulaire (50) joint les zones de fixation (33) des tirants.

7. Servomoteur d'assistance au freinage selon la revendication **6, caractérisé en ce que** les nervures radiales (40, 41, 42, 43) joignent la nervure circulaire (50) à la périphérie de la cheminée (16).
